# FASCICULE DE BREVET EUROPEEN

(11) **EP 1 087 685 B1**
(45) Date de publication et mention de la délivrance du brevet: **21.07.2004**
(21) Numéro de dépôt: 99925102.8
(22) Date de dépôt: 15.06.1999
(51) Int. Cl.: A47J 37/12

(54) **APPAREIL ELECTRIQUE DE CUISSON A CUVE AMOVIBLE**
ELEKTRISCHES GARGERÄT MIT HERAUSNEHMBARER WANNE
ELECTRICAL COOKING APPLIANCE WITH REMOVABLE BOWL

(30) Priorité: 17.06.1998 FR 9807868
(43) Date de publication de la demande: 04.04.2001
(73) Titulaire: SEB S.A., 69130 Ecully (FR)
(72) Inventeur: BEUGNOT, Bernard, F-21120 Is sur Tille (FR); FEDERICO, Dominique, F-21800 Chevigny Saint Sauveur (FR); SESTIER, Laurent, F-21260 Selongey (FR)
(74) Mandataire: Kiehl, Hubert
(86) Numéro de dépôt international: PCT/FR1999/001432
(87) Numéro de publication internationale: WO 1999/065374

(56) Documents cités:
- EP-A- 0 587 300
- WO-A-80/01535
- US-A- 4 713 522

## Description

### DOMAINE TECHNIQUE

La présente invention est relative à un appareil électrique de cuisson comportant une cuve amovible comprenant un élément chauffant blindé fixé sous la face inférieure de ladite cuve.

### TECHNIQUE ANTERIEURE

Il est connu du document EP 0 587 300 de réaliser une friteuse à cuve amovible comportant un boîtier formant un logement prévu pour recevoir une cuve amovible. La cuve amovible comporte un élément chauffant fixé sous le fond de ladite cuve, les bornes dudit élément chauffant étant susceptibles d'être connectées à un dispositif connecteur électrique disposé dans le logement lorsque la cuve est introduite dans ledit logement. Cette construction vise à offrir un appareil simple et sûr d'emploi, présentant une cuve aisément nettoyable, et dont les performances de chauffe sont bonnes.

Les éléments chauffants réalisés sous forme d'éléments chauffants blindés présentent des dispersions géométriques importantes, liées au centrage des bornes de connexion, à la longueur de l'élément chauffant, ou à la mise en forme de l'élément chauffant. Ces dispersions obligent à prévoir un certain jeu de la cuve dans le logement, afin de conserver sur le dispositif connecteur électrique des ouvertures prévues pour l'introduction des bornes de l'élément chauffant qui soient compatibles avec les normes de sécurité électrique. Pour un élément chauffant présentant des tolérances géométriques extrêmes, il y a un risque que l'utilisateur déforme les bornes de l'élément chauffant ou détériore le connecteur, en insérant la cuve dans le logement alors que les bornes de l'élément chauffant ne sont pas en face des ouvertures du connecteur. La conséquence d'une déformation des bornes de l'élément chauffant peut être la mise en défaut de la fonction étanchéité de la résistance. Il en découlera une reprise d'humidité de l'isolant électrique de l'élément chauffant et donc un défaut d'isolation. La conséquence d'une détérioration du connecteur peut être l'accessibilité aux parties électriques susceptibles d'être sous tension.

### EXPOSE DE L'INVENTION

La présente invention vise à remédier aux problèmes précités et à fournir un appareil électrique de cuisson à cuve amovible sous laquelle est fixé un élément chauffant blindé, qui soit sûr et simple d'emploi.

Un autre objet de l'invention vise à proposer un appareil électrique de cuisson à cuve amovible sous laquelle est fixé un élément chauffant blindé, qui soit d'un encombrement réduit.

Les objets assignés à l'invention sont atteints avec un appareil électrique de cuisson, notamment friteuse, comportant un boîtier formant un logement prévu pour recevoir une cuve amovible, ladite cuve comprenant des parois latérales et un fond sous lequel est fixé un élément chauffant blindé comportant deux extrémités terminées chacune par une borne de connexion, un connecteur électrique monté dans le boîtier, ledit connecteur comportant des contacts électriques disposés en regard d'ouvertures prévues pour recevoir les bornes de l'élément chauffant blindé, lors de l'introduction de la cuve dans le logement, caractérisé en ce que le connecteur est monté mobile en translation latérale par rapport au fond du boîtier et que les ouvertures présentent des chanfreins prévus pour guider les bornes de l'élément chauffant vers les contacts électriques.

Ainsi lors de l'introduction de la cuve dans le logement, la borne de l'élément chauffant arrivant au contact du chanfrein est guidée dans l'ouverture par ledit chanfrein. Si la cuve arrive en butée latérale dans le logement, le connecteur monté mobile est repoussé par la borne de l'élément chauffant coopérant avec le chanfrein et ladite borne peut s'insérer dans l'ouverture de manière à réaliser la connexion électrique.

Avantageusement chacune des extrémités de l'élément chauffant s'inscrit dans un plan parallèle à la direction d'introduction de la cuve dans le logement, le connecteur étant mobile selon une direction sensiblement perpendiculaire aux dits plans.

Cette disposition permet en particulier de remédier aux dispersions concernant le centrage des bornes de l'élément chauffant.

De préférence les extrémités de l'élément chauffant sont disposées sensiblement dans un même plan parallèle à la direction d'introduction de la cuve dans le logement.

Cette disposition permet en particulier de remédier aux dispersions concernant la longueur de l'élément chauffant.

Avantageusement les extrémités de l'élément chauffant sont inclinées par rapport à la direction d'introduction de la cuve dans le logement, d'un angle supérieur à 30°.

Cette disposition limite l'ouverture de l'angle formé par l'une des bornes d'une part et le fond de la cuve sur lequel est fixé l'élément chauffant d'autre part, et contribue ainsi à limiter les dispersions géométriques des bornes. Cette disposition simplifie également la mise en forme de l'élément chauffant blindé car elle évite les coudes à angle droit. De plus la hauteur nécessaire pour la connexion est limitée ce qui réduit l'encombrement du dispositif et par là même les dimensions de l'appareil.

Avantageusement le connecteur comporte une face supérieure et un pourtour latéral, chaque ouverture étant formée par une découpe supérieure ménagée dans la face supérieure et prolongée par une découpe latérale ménagée dans le pourtour latéral.

Cette disposition permet de gagner en encombrement car elle autorise une position plus basse de la cuve dans le boîtier lorsque les bornes de l'élément chauffant sont insérées dans les ouvertures du connecteur, que pour un connecteur ne comportant pas de découpes latérales.

De manière avantageuse la cuve comporte une patte et le connecteur comporte une ouverture et une languette de connexion, la patte étant susceptible d'être introduite dans l'ouverture et de coopérer avec la languette de connexion.

Cette patte peut notamment être directement issue de la cuve lorsque celle-ci est réalisée par moulage, ou encore être rapportée.

De manière préférée les contacts électriques, la languette de connexion, les bornes de l'élément chauffant et la patte sont agencées de manière à ce que la patte soit susceptible de rentrer en contact avec la languette correspondante avant que les bornes de l'élément chauffant ne rentrent en contact avec leurs contacts électriques respectifs.

Cette disposition permet notamment de mettre à la terre la cuve avant que l'élément chauffant ne soit alimenté électriquement.

Selon un mode de réalisation préféré le connecteur comporte des pattes, de préférence au nombre de trois, susceptibles de coulisser dans des trous oblongs ménagés dans un bâti solidaire du boîtier.

Cette construction simple permet d'assurer un guidage de manière fiable.

Selon un autre mode de réalisation, le connecteur est lié au boîtier par des moyens de rappel.

Cette disposition permettant au connecteur d'occuper une position stable de référence améliore les performances du dispositif. En effet la largeur des chanfreins peut être réduite par rapport à une construction ne comportant pas de moyens de rappel, la position stable du connecteur pouvant être par exemple la position médiane par rapport aux positions extrêmes susceptibles. d'être occupées par le connecteur.

Avantageusement le connecteur est monté mobile selon deux directions.

Le connecteur peut par exemple être maintenu par trois ressorts disposés en étoile. Cette disposition est particulièrement intéressante lorsque les bornes ne sont pas disposées dans un même plan. En effet le connecteur peut effectuer un mouvement de rotation, de petite amplitude, lors de l'accostage des bornes de l'élément chauffant sur les chanfreins dudit connecteur.

### DESCRIPTION SOMMAIRE DES DESSINS

L'invention sera mieux comprise à l'étude de modes de réalisation pris à titre nullement limitatifs et illustrés dans les figures annexées dans lesquelles :
- la figure 1 est une vue schématique partielle en coupe longitudinale d'un exemple de réalisation d'un appareil de cuisson électrique selon l'invention,
- la figure 2 est une vue schématique de dessus d'un élément de l'appareil montré à la figure 1,
- la figure 3 est une vue schématique de côté de ce même élément.

### MEILLEURE MANIERE DE REALISER L'INVENTION

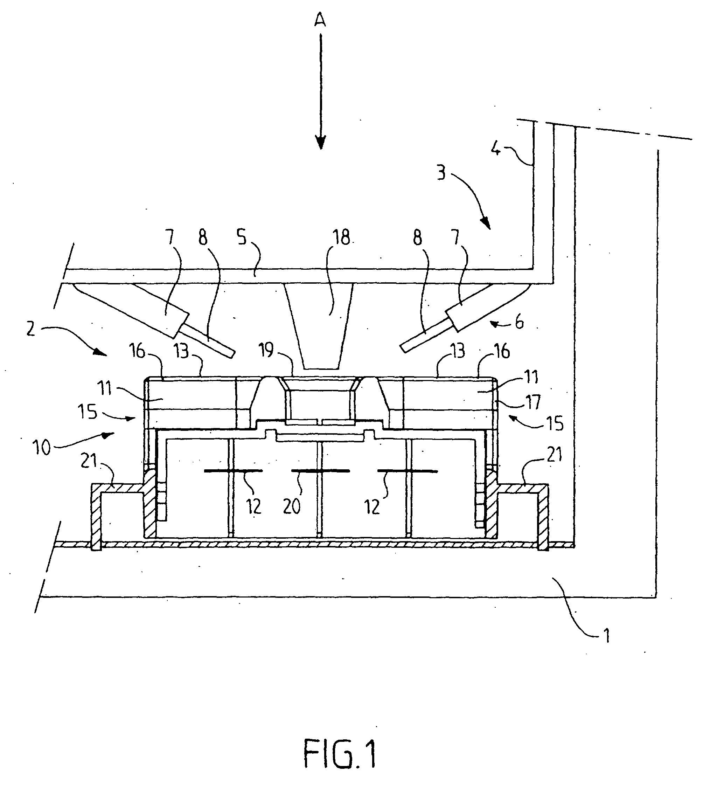

L'appareil électrique de cuisson, notamment friteuse, montré à la figure 1 comporte un boîtier 1 formant un logement 2 prévu pour recevoir une cuve 3 amovible. La cuve 3 comprend des parois latérales 4 et un fond 5 sous lequel est fixé un élément chauffant blindé 6. Cet élément chauffant présente de manière connue deux extrémités 7 terminées chacune par une borne de connexion 8. Un connecteur électrique 10 monté dans le boîtier 1 comporte des contacts électriques 12 disposés en regard d'ouvertures 11 prévues pour recevoir les bornes 8 de l'élément chauffant blindé 6.

Selon l'invention !e connecteur 10 est monté mobile en translation latérale par rapport au fond du boîtier 1 et les ouvertures 11 présentent des chanfreins 13 prévus pour guider les bornes 8 de l'élément chauffant 6 vers les contacts électriques 12.

Avantageusement, le connecteur est mobile selon une direction sensiblement perpendiculaire aux plans définis par la direction d'introduction A de la cuve 3 dans le logement 2 d'une part et chacune des extrémités 7 de l'élément chauffant 6 d'autre part.

De préférence, les extrémités 7 de l'élément chauffant 6 et la direction d'introduction A de la cuve 3 dans le logement 2 sont disposées sensiblement dans un même plan.

Avantageusement les extrémités 7 de l'élément chauffant 6 sont inclinées par rapport à la direction d'introduction de la cuve 3 dans le logement 2, d'un angle supérieur à 30° et par exemple tel que représenté à la figure 1, d'un angle d'environ 60°.

De manière avantageuse le connecteur 10 comporte une face supéneure 14 et un pourtour latéral 15, chaque ouverture 11 étant formée par une découpe supérieure 16 ménagée dans la face supérieure 14 et prolongée par une découpe latérale 17 ménagée dans le pourtour latéral 15, tel que montré à la figure 1.

Avantageusement encore la cuve 3 comporte une patte 18 susceptible de s'introduire dans une ouverture 19 du connecteur 10 et de coopérer avec une languette de connexion 20 du connecteur 10. La patte 18 peut être issue de la cuve 3 lorsque ladite cuve est moulée, ou encore être rapportée, par exemple sur une cuve emboutie ou thermosoudée.

De préférence les languettes de connexion 12, 20, les bornes 8 de l'élément chauffant 6 et la patte 18 sont agencées de manière à ce que la patte 18 soit susceptible de rentrer en contact avec la languette 20 correspondante avant que les bornes 8 de l'élément chauffant 6 ne rentrent en contact avec leurs languettes correspondantes respectives 12.

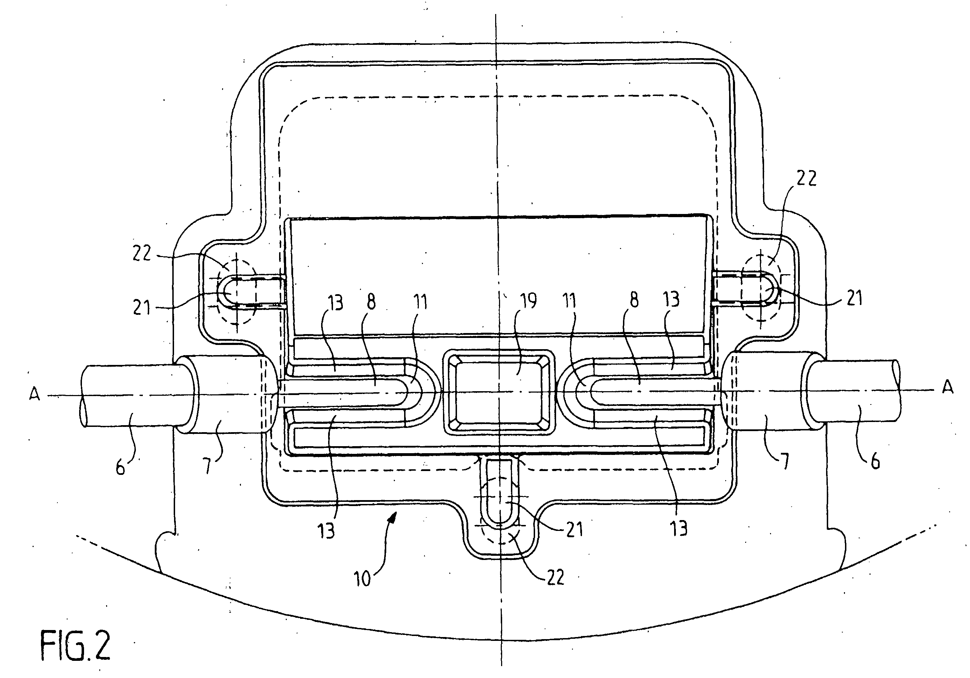

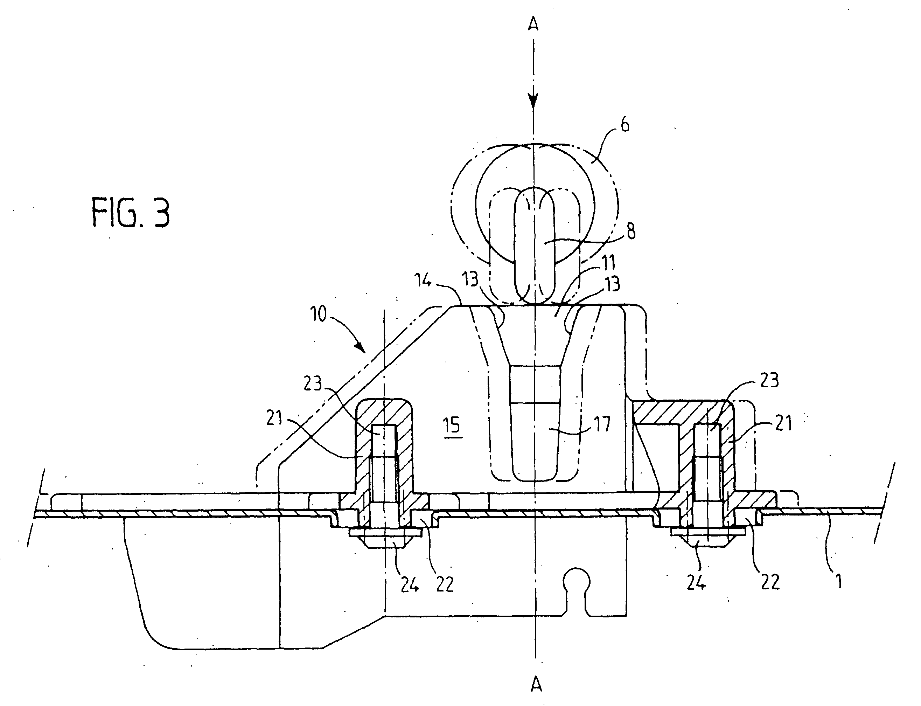

Le connecteur 10 montré aux figures 2 et 3 comporte trois pattes 21 susceptibles de coulisser dans des trous 22 oblongs ménagés dans un bâti 25 solidaire du boîtier 1. Chaque patte 21 comporte un alésage central 23. Un rivet 24 inséré dans chacun des alésages 23 permet de solidariser le connecteur 10 au bâti 25.

Selon un autre mode de réalisation, non montré aux figures, le connecteur 10 est lié au boîtier 1 par des moyens de rappel. Les moyens de rappel peuvent par exemple consister en deux ressorts antagonistes prévus pour rappeler le connecteur mobile selon une direction de préférence perpendiculaire au plan dans lequel les bornes de connexion sont disposées, le connecteur comportant avantageusement au moins une lumière de guidage coopérant avec une patte solidaire du boîtier. Les moyens de rappel peuvent également consister en trois ressorts, disposés par exemple en étoile à 120°, Cette disposition permet d'obtenir un montage dans lequel le connecteur est mobile selon deux directions, par exemple dans un plan si le connecteur glisse sur un fond plan du boîtier.

L'appareil selon l'invention s'utilise de la manière suivante.

L'utilisateur introduit la cuve 3 dans le logement 2. Lors de la connexion de l'élément chauffant blindé 6 avec le connecteur électrique 10, la ou les bornes 8 peuvent coopérer avec les chanfreins 13, par exemple les découpes 16 ou 17 et déplacer le connecteur 10 par rapport au boîtier 1. Les bornes 8 s'introduisent ainsi naturellement dans les ouvertures 11 et viennent en contact avec les languettes de connexion 12.

L'appareil permet ainsi de réaliser la connexion de l'élément chauffant 6 au connecteur 10 de manière automatique, par simple insertion de la cuve 3 dans le logement 2 du boîtier 1, sans risque de détériorer l'élément chauffant 6 et/ou le connecteur 10.

De nombreuses améliorations peuvent être apportées à cet appareil dans le cadre des revendications.

### POSSIBILITES D'APPLICATION INDUSTRIELLE

L'invention trouve son application dans le domaine technique des appareils électriques de chauffe ou de cuisson pour aliments.

## Revendications

1. Appareil électrique de cuisson, notamment friteuse, comportant un boîtier (1) formant un logement (2) prévu pour recevoir une cuve (3) amovible, ladite cuve comprenant des parois latérales (4) et un fond (5) sous lequel est fixé un élément chauffant blindé (6) comportant deux extrémités (7) terminées chacune par une borne de connexion (8), un connecteur électrique (10) monté dans le boîtier (1), ledit connecteur comportant des contacts électriques (12) disposés en regard d'ouvertures (11) prévues pour recevoir les bornes (8) de l'élément chauffant blindé (6), lors de l'introduction de la cuve (3) dans le logement (2), **caractérisé en ce que** le connecteur (10) est monté mobile en translation latérale par rapport au fond du boîtier (1) et que les ouvertures (11) présentent des chanfreins (13) prévus pour guider les bornes (8) de l'élément chauffant (6) vers les contacts électriques (12).

2. Appareil selon la revendication 1 **caractérisé en ce que** chacune des extrémités (7) de l'élément chauffant (6) s'inscrit dans un plan parallèle à la direction d'introduction de la cuve (3) dans le logement (2) et **en ce que** le connecteur (10) est mobile selon une direction sensiblement perpendiculaire aux dits plans.

3. Appareil selon la revendication 2 **caractérisé en ce que** les extrémités (7) de l'élément chauffant (6) sont disposées sensiblement dans un même plan parallèle à la direction d'introduction de la cuve (3) dans le logement (2).

4. Appareil selon l'une des revendications 1 à 3 **caractérisé en ce que** les extrémités (7) de l'élément chauffant (6) sont inclinées par rapport à la direction d'introduction de la cuve (3) dans le logement (2).

5. Appareil selon l'une des revendications 1 à 4 **caractérisé en ce que** le connecteur (10) comporte une face supérieure (14) et un pourtour latéral (15), chaque ouverture (11) étant formée par une découpe supérieure (16) ménagée dans la face supérieure (14) et prolongée par une découpe latérale (17) ménagée dans le pourtour latéral (15).

6. Appareil selon l'une des revendications 1 à 5 **caractérisé en ce que** la cuve (3) comporte une patte (18) et **en ce que** le connecteur (10) comporte une ouverture (19) et une languette de connexion (20), la patte (18) étant susceptible d'être introduite dans l'ouverture (19) et de coopérer avec la languette de connexion (20).

7. Appareil selon la revendication 6 **caractérisé en ce que** les contacts électriques (12), la languette de connexion (20), les bornes (8) de l'élément chauffant (6) et la patte (18) sont agencées de manière à ce que la patte (18) soit susceptible de rentrer en contact avec la languette de connexion (20) avant que les bornes (8) de l'élément chauffant (6) ne rentrent en contact avec leurs contacts électriques respectifs (12).

8. Appareil selon l'une des revendications 1 à 7 **caractérisé en ce que** le connecteur (10) comporte des pattes (21), de préférence au nombre de trois, susceptibles de coulisser dans des trous (22) oblongs ménagés dans un bâti (25) solidaire du boîtier (1).

9. Appareil selon l'une des revendications 1 à 8 **caractérisé en ce que** le connecteur (10) est lié au boîtier (1) par des moyens de rappel.

10. Appareil selon la revendication 9 **caractérisé en ce que** le connecteur (10) est monté mobile selon deux directions.

## Claims

1. An electric cooking appliance, in particular a deep fryer, comprising a casing (1) forming a housing (2) designed to receive a removable bowl (3), said bowl having side walls (4) and a bottom (5) beneath which there is secured a metal-clad heater element (6) having two ends (7), each terminated by a connection terminal (8), an electrical connector (10) mounted in the casing (1), said connector having electrical contacts (12) placed facing openings (11) provided to receive the terminals (8) of the metal-clad heater elements (6) when the bowl (3) is inserted into the housing (2), the appliance being **characterized in that** the connector (10) is mounted to move laterally in translation relative to the bottom of the casing (1) and **in that** the openings (11) present chamfers (13) for guiding the terminals (8) of the heater element (6) towards the electrical contacts (12).

2. An appliance according to claim 1, **characterized in that** each of the ends (7) of the heater element (6) is inscribed in a respective plane parallel to the direction in which the bowl (3) is inserted into the housing (2), and **in that** the connector (10) is movable in a direction substantially perpendicular to said planes.

3. An appliance according to claim 2, **characterized in that** the ends (7) of the heater element (6) are disposed substantially in the same plane parallel to the direction in which the bowl (3) is inserted into the housing (2).

4. An appliance according to any one of claims 1 to 3, **characterized in that** the ends (7) of the heater element (6) are inclined relative to the direction in which the bowl (3) is inserted into the housing (2).

5. An appliance according to any one of claims 1 to 4, **characterized in that** the connector (10) has a top face (14) and a side wall (15), each opening (11) being formed by a top cutout (16) formed in the top face (14) and extended via a side cutout (17) formed in the side wall (15).

6. An appliance according to any one of claims 1 to 5, **characterized in that** the bowl (3) includes a tab (18), and **in that** the connector (10) includes an opening (19) and a connection tongue (20), the tab (18) being suitable for being inserted into the opening (19) and for co-operating with the connection tongue (20).

7. An appliance according to claim 6, **characterized in that** the electrical contacts (12), the connection tongue (20), the terminals (8) of the heater element (6), and the tab (18) are arranged in such a manner that the tab (18) is suitable for coming into contact with the connection tongue (20) before the terminals (8) of the heater element (6) come into contact with their respective electrical contacts (12).

8. An appliance according to any one of claims 1 to 7, **characterized in that** the connector (10) includes tabs (21), preferably three tabs, suitable for sliding in oblong holes (22) formed in a structure (25) secured to the casing (1).

9. An appliance according to any one of claims 1 to 8, **characterized in that** the connector (10) is connected to the casing (1) by return means.

10. An appliance according to claim 9, **characterized in that** the connector (10) is mounted to move in two directions.

## Patentansprüche

1. Elektrisches Gargerät, insbesondere Friteuse, umfassend ein Gehäuse (1), das eine Aufnahme (2) bildet, die vorgesehen ist, um eine abnehmbare Wanne (3) aufzunehmen, wobei die Wanne Seitenwände (4) und einen Boden (5) aufweist, unter dem ein abgeschirmtes Heizelement (6) befestigt ist, das zwei Enden (7) aufweist, die jeweils in eine Klemme (8) enden, einen elektrischen Stecker (10), der in das Gehäuse (1) eingebaut ist, wobei der Stecker elektrische Kontakte (12) aufweist, die gegenüber von Öffnungen (11) angeordnet sind, welche vorgesehen sind, um die Klemmen (8) des abgeschirmten Heizelementes (6) aufzunehmen, wenn die Wanne (3) in die Aufnahme (2) eingeführt wird, **dadurch gekennzeichnet, dass** der Stecker (10) in bezug zu dem Boden des Gehäuses (1) seitlich verschiebbar montiert ist und dass die Öffnungen (11) Abschrägungen (13) aufweisen, die vorgesehen sind, um die Klemmen (8) des Heizelementes (6) zu den elektrischen Kontakten (12) zu führen.

2. Gerät nach Anspruch 1, **dadurch gekennzeichnet, dass** jedes Ende (7) des Heizelementes (6) sich in einer Ebene befindet, die parallel ist zur Einführungsrichtung der Wanne (3) in die Aufnahme (2), und dass der Stecker (10) in eine Richtung, die im Wesentlichen senkrecht zu den Ebenen ist, beweglich ist.

3. Gerät nach Anspruch 2, **dadurch gekennzeichnet, dass** die Enden (7) des Heizelementes (6) im Wesentlichen in ein und derselben Ebene angeordnet sind, welche parallel zur Einführungsrichtung der Wanne (3) in die Aufnahme (2) ist.

4. Gerät nach einem der Ansprüche 1 bis 3, **dadurch gekennzeichnet, dass** die Enden (7) des Heizelementes (6) in bezug zur Einführungsrichtung der Wanne (3) in die Aufnahme (2) geneigt sind.

5. Gerät nach einem der Ansprüche 1 bis 4, **dadurch gekennzeichnet, dass** der Stecker (10) eine obere Fläche (14) und einen seitlichen Umfang (15) aufweist, wobei jede Öffnung (11) von einem oberen Ausschnitt (16) gebildet wird, der in der oberen Fläche (14) ausgebildet ist, und von einem seitlichen Ausschnitt (17) verlängert wird, der in dem seitlichen Umfang (15) ausgebildet ist.

6. Gerät nach einem der Ansprüche 1 bis 5, **dadurch gekennzeichnet, dass** die Wanne (3) eine Lasche (18) aufweist und dass der Stecker (10) eine Öffnung (19) und eine Verbindungszunge (20) aufweist, wobei die Lasche (18) in die Öffnung (19) eingeführt und mit der Verbindungszunge (20) zusammenwirken kann.

7. Gerät nach Anspruch 6, **dadurch gekennzeichnet, dass** die elektrischen Kontakte (12), die Verbindungszunge (20), die Klemmen (8) des Heizelementes (6) und die Lasche (18) so angeordnet sind, dass die Lasche (18) die Verbindungszunge (20) berühren kann, bevor die Klemmen (8) des Heizelementes (6) ihre jeweiligen elektrischen Kontakte (12) berühren.

8. Gerät nach einem der Ansprüche 1 bis 7, **dadurch gekennzeichnet, dass** der Stecker (10) vorzugsweise drei Laschen (21) aufweist, die in längliche Löcher (22) gleiten können, welche in einem Gestell (25), das mit dem Gehäuse (1) fest verbunden ist, angebracht sind.

9. Gerät nach einem der Ansprüche 1 bis 8, **dadurch gekennzeichnet, dass** der Stecker (10) mittels Rückstellmittel an das Gehäuse (1) angeschlossen ist.

10. Gerät nach Anspruch 9, **dadurch gekennzeichnet, dass** der Stecker (10) in zwei Richtungen beweglich montiert ist.
